# EUROPÄISCHE PATENTANMELDUNG

(11) **EP 1 955 894 A2**
(43) Veröffentlichungstag der Anmeldung: **13.08.2008**
(21) Anmeldenummer: 08001675.1
(22) Anmeldetag: 30.01.2008
(51) Int. Cl.: B60P 1/00, B60R 5/04

(54) **Transportvorrichtung**

(30) Priorität: 12.02.2007 DE 102007006775
(71) Anmelder: Faller, Hubert, 77855 Achern (DE)
(72) Erfinder: Faller, Hubert, 77855 Achern (DE)
(74) Vertreter: Ege, Guido

(57) **Zusammenfassung**

Die Erfindung betrifft eine Transportvorrichtung mit zumindest einem Transportbehälter, der in ein Fahrzeug aufgenommen und mittels eines Transportgestells aus diesem absetzbar ist. Die Transportvorrichtung ist in der Weise ausgestattet, dass der Transportbehälter nach dem Absetzen an die Höhe des Fahrzeugs anpassbar ist und wieder ohne hohen Kraftaufwand auf annähernd gleichem Niveau wie das Fahrzeug wieder in dieses eingebracht werden kann.

## Beschreibung

Die Erfindung betrifft eine Transportvorrichtung zur Aufnahme in einem Fahrzeug bestehend aus einem Transportbehälter und einem Transportgestell, auf welchem der Transportbehälter nach einem Absetzen von einem Ladeboden des Fahrzeugs transportierbar ist und von welchem der Transportbehälter auf den Ladeboden des Fahrzeugs aufnehmbar ist.

Für die Aufnahme von variablen Ladungen in Fahrzeugen, insbesondere in Pkw-Kombis, Lieferwagen, sogenannten Pickups, Vans, SUV's und dergleichen bieten sich Transportbehälter beispielsweise für Werkstattausrüstungen an, die dem Fahrzeug entnommen werden können, so dass wechselnde Beladungen oder ein bequemer Zugriff auf den Transportbehälter möglich ist.

Allein durch Reifenbelastungen und Federwege des Fahrzeuges können Niveauunterschiede des Fahrzeuges zwischen beladenem und unbeladenem Fahrzeug entstehen.

Die DE 198 02 959 A1 zeigt eine mobile Werkstatteinrichtung, die aus einem Transportbehälter besteht, der auf einem im Fahrzeug angeordneten Führungsschienensystem aus dem Fahrzeug herausgezogen werden kann. Zur Mobilisierung nach dem Absetzen des Behälters auf der Straße sind am Unterteil des Transportbehälters aus dem Behälter schwenkbare Stützen mit Rädern angebracht. Ein Niveauausgleich zwischen dem Transportbehälter und dem Fahrzeug sind ohne hohen Kraftaufwand bei abgesetztem Behälter nicht vorgesehen.

Die DE 295 07 027 U1 zeigt eine mobile Serviceeinrichtung, die auf Führungsschienen im Fahrzeug geführt ist und auf ein getrennt vom Fahrzeug vorhandenes Fahrgestell überführt werden kann. Ein Niveauausgleich zwischen dem Fahrzeug und dem externen Fahrgestell wird durch schräg nach unten verlaufende zusätzlich eingesteckte Teile der Führungsschienen im Fahrzeug ausgeglichen.

Aufgabe der Erfindung ist, eine Transportvorrichtung vorzuschlagen, die einfach handhabbar ist. Weiterhin soll die Transportvorrichtung günstig herzustellen sein.

Die Aufgabe wird durch eine Transportvorrichtung gelöst, die zur Aufnahme in einem Fahrzeug geeignet ist. Sie besteht zumindest aus einem Transportbehälter und einem Transportgestell, auf welchem der Transportbehälter nach einem Absetzen von einem Ladeboden des Fahrzeugs transportierbar ist und von welchem der Transportbehälter auf den Ladeboden des Fahrzeugs aufnehmbar ist. Da in der Regel die Höhe des Fahrzeugs vor und nach der Beladung durch einen Transportbehälter variiert, wird erfindungsgemäß die Höhe des Transportgestells bei abgesetztem Transportbehälter an die Höhe des Ladebodens angepasst, wenn der Transportbehälter wieder in das Fahrzeug aufgenommen werden soll. Auf diese Weise können Ausgleichskräfte, die teilweise vom Fahrer oder dafür eingesetzten Hilfskräften aufzuwendende Kräfte zum Überwinden des Höhenunterschieds beziehungsweise zusätzliche Rampensysteme, die zu einer Verlängerung des benötigten Raums an der Ladeöffnung des Fahrzeugs führen, vermieden werden, da bei der vorgeschlagenen Lösung das Transportgestellt direkt an die Ladeöffnung herangeführt werden kann.

Der Begriff Fahrzeug umfasst alle Verkehrsmittel, die zur Aufnahme eines Transportbehälters geeignet sind, beispielsweise Personenkraftwagen und Anhänger. Vorzugsweise eignet sich die die Transporteinrichtung für Personenkraftwagen in Kombibauweise und besonders für Lieferwagen mit einer entsprechend großen Aufnahmefläche. Dabei kann bei Fahrzeugen mit einer im Fahrzeugraum vorhandenen Originalausstattung wie beispielsweise zusätzliche Sitze oder Sitzbänke der Transportbehälter untergebracht werden, indem die Originalausstattung zumindest teilweise entfernt wird. Besonders vorteilhaft kann sein, wenn an für die Originalausstattung vorgesehen Befestigungseinrichtungen für den Transportbehälter zu dessen Verlagerung und/oder Fixierung entsprechende Einbauelemente angebracht werden, so dass die Schaffung zusätzlicher Befestigung und Änderungen im Fahrzeug entfallen kann. In besonderen Ausgestaltungsbeispielen können insbesondere bei gewichtigen Transportbehältern zusätzliche Befestigungspunkte notwendig werden.

Unter Transportbehälter verstehen sich alle geschlossenen, teilweise geschlossenen und offenen Behälter die für sich Ladung aufnehmen können. Vorteilhafterweise sind diese Transportbehälter aus einem stabilen Rahmen mit entsprechenden Verkleidungen aus Metallblechen, Kunststoffteilen und/oder Holzverkleidungen gebildet. Auch können selbstragende Konstruktionen vorgesehen sein. Vorzugsweise kann ein Transportbehälter zur Minimierung der Variantenvielfalt für mehrere Fahrzeugtypen derselben Fahrzeugklassen optimiert sein oder alternativ für jedes Fahrzeug zur optimierten Raumausschöpfung jeweils auf einen speziellen Fahrzeugtyp angepasst werden.

Art und Ausgestaltung des Transportbehälters können weitestgehend an die Anforderungen des Benutzers angepasst werden. So können beispielsweise Transportbehälter für Werkstattausrüstungen, zum Vorhalten von Kauf- oder Ersatzteilen, für Campingausrüstung und/oder als Campingkabine, als Kühlbehälter, für Schausteller, als Tiertransportbehälter oder als Imbiss- oder Verkaufskabine vorgesehen werden. Es versteht sich, dass diese Aufzählung nicht abschließend ist. Besonders vorteilhaft ist für die Türen oder andere Ausnehmungen des Transportbehälters eine mehrfunktionale Öffnung. So können Türen oder Klappen vorgesehen werden, die sich wahlweise im Schiebe- oder Klappbetrieb öffnen lassen.

In entsprechend ausgebildeten Fahrzeugen können mehrere Transportbehälter gleicher oder unterschiedlicher Art untergebracht sein, wobei diese direkt hintereinander angeordnet sein können. Dabei ist besonders vorteilhaft, wenn bei mehreren Transportbehältern diese einerseits durch eine hintere und andererseits durch eine Ladeöffnung abgesetzt werden können, so dass verschiedene Transportbehälter unabhängig voneinander abgesetzt werden können. In der Regel ist dabei der vordere, durch eine Seitentür ausfahrbare Transportbehälter schmaler. Um insbesondere aus Produktionsgründen und/oder bei vom Transportbehälter absetzbaren Transportgestellen kompatible Komponenten verwenden zu können, kann eine Achse mit zwei Stützrädern eingesetzt werden, deren Achsabstand auf die Breite des schmaleren Transportbehälters abgestimmt ist und auch bei dem über die Hecktüren oder -klappe ausfahrbaren Transportbehälter mit ausreichender Stabilität eingesetzt werden kann.

Unter Transportgestell ist diejenige Einrichtung zu verstehen, auf die der Transportbehälter durch Verlagerung aus dem Fahrzeug heraus aufgenommen wird. Der Begriff umfasst nicht nur eine Einrichtung, auf der der Transportbehälter vom Fahrzeug entfernt wird, vielmehr kann der Transportbehälter auch nur teilweise aus dem Fahrzeug heraus bewegt und sich teilweise auf dem Transportgestell abstützen. Dies kann insbesondere dann von Vorteil sein, wenn Fahrzeug und Transportbehälter auf ein größeres Gesamtvolumen, beispielsweise in einem zu einem Verkaufs- oder Beratungsraum erweiterbaren Fahrzeug, ausgedehnt werden sollen. In diesem Fall genügt ein Transportgestell, das eine endseitige Abstützung gewährleisten kann. Als Transportgestell kann für mehrere gleiche oder unterschiedliche Transportbehälter ein einziges Transportgestell vorgesehen sein, das im Fahrzeug oder auch stationär aufbewahrt werden kann. Beispielsweise kann an einer Baustelle oder in einem Werk ein Transportgestell stationär für den Wechsel mehrerer Transportbehälter auch unterschiedlicher Fahrzeuge bereitgehalten werden. Hierzu ist es vorteilhaft, wenn Transportbehälter unterschiedlicher Art oder für unterschiedliche Fahrzeuge auf dasselbe Transportgestell abgestimmt sind.

Im einfachsten Fall ist das Transportgestell unterhalb des Transportbehälters vorzugsweise einteilig mit diesem ausgebildet. Derartige Kombinationen aus Transportgestell und Transportbehälter können komplett absetzbar sein, der Transportbehälter kann für spezielle Anwendungsfälle auch nur teilweise aus dem Fahrzeug herausgezogen werden. Es versteht sich, dass derartige Transportbehälter - auch wenn sie nur im Fahrzeug verlagert werden und nicht abgesetzt werden - wie absetzbare Transportbehälter über einen elektrischen Antrieb verfügen können, die eine Verlagerung des Transportbehälters gegenüber dem Fahrzeug in Richtung Ladeöffnung erlaubt.

Es hat sich weiterhin als vorteilhaft erwiesen die Transportvorrichtung zweiteilig auszubilden, das heißt, Transportbehälter und Transportgestell voneinander getrennt auszugestalten. So kann in vorteilhafter Weise der Transportbehälter mit mehr effektivem Ladevolumen versehen werden. Auch kann der Schwerpunkt des Transportbehälters näher an die Achse des Fahrzeugs gebracht werden als bei Integration hoch bauender Transportgestelle. Lediglich Mittel wie Rollen oder Gleiter zur Verlagerung des Transportbehälters im Fahrzeug werden vorteilhafterweise zwischen dem Ladeboden des Fahrzeugs und dem Behälterboden angebracht. Es versteht sich, dass bezüglich der Bauhöhe des Transportgestells ein sinnvoller Mittelweg gefunden werden kann, wenn die Einteiligkeit der Transportvorrichtung beibehalten werden soll. Besonders vorteilhaft ist die Absenkung des Ladungsschwerpunktes des Transportbehälters zur Verbesserung des Fahrverhaltens des Fahrzeugs, beispielsweise in Kurven, an Gefällstrecken und bei glatter Fahrbahn.

Das Transportgestell mit eingeschwenkten Beinen kann vorteilhafterweise zwischen Ladeöffnung und Transportbehälter angebracht werden und damit leicht entladen werden. Bei kleinen Transportbehältern mit geringem Gewicht kann auch das Transportgestell leicht gebaut sein, so dass es in einfacher Weise ausgeladen werden kann. Bei höheren Gewichten kann das Transportgestell zwischenzeitlich mit dem Fahrzeug verbunden sein und aus dem Fahrzeug ausgeschwenkt oder mittels Entladevorrichtungen, beispielsweise Seilzügen, Hebelvorrichtungen oder einer Hydraulik ausgeladen und aufgebaut werden, indem beispielsweise während des Entladens bereits die Beine ausgeschwenkt werden. Alternativ kann das Transportgestell aus Sicht der Ladeöffnung vor dem Transportbehälter aufbewahrt werden und über eine Seitentür abgesetzt und betriebsbereit gemacht werden.

Es hat sich als vorteilhaft erwiesen, wenn das Transportgestell einen Rahmen aufweist, aus dem zumindest drei vorzugsweise vier bezüglich ihrer Länge verstellbare, aus der Ebene des Rahmens in eine hierzu zumindest annähernd senkrechte Position schwenkbare oder einsteckbare Beine mit Rädern aufweist. Die Beine können sowohl im eingeschwenkten als auch im ausgeschwenkten Zustand durch entsprechende Fixiermittel wie Rasten, Bolzen und Schnappverschlüsse, die sich leicht automatisch oder von Hand lösen und fixieren lassen, in ihrer gewünschten Position gehalten werden. Die Räder können an den Beinen in Laufrichtung drehbar angeordnet sein und können stoßdämpfend in der Weise ausgestaltet sein, dass eine entsprechende Bereifung und/oder separate Stoßdämpfer wirksam zwischen Beinen und Rädern angeordnet sind. Als besonders vorteilhaft hat sich erwiesen, wenn die Räder im Transportgestell platzsparend eingeschwenkt werden, indem beispielsweise die vom Raddurchmesser aufgespannte Fläche parallel zu der Aufnahmefläche des Transportbehälters angeordnet ist, so dass die notwendige Höhe des die Räder aufnehmenden Rahmens im Wesentlichen auf die Breite der Räder begrenzt werden kann.

Gemäß eines erfinderischen Gedankens wird die Höhe der Transportvorrichtung an den Ladeboden des Fahrzeugs durch Anpassung der - gegebenenfalls durch den Untergrund vorgegebene unterschiedliche - Länge der Beine angepasst. Dabei lässt sich die Länge der Beine beispielsweise mittels eines Spindelgewindes einstellen. Dabei ist die Gewindespindel vorzugsweise in den Beinen untergebracht und wird aus dieser herausgeschraubt, wenn die Länge des Beines zunehmen soll.

Alternativ oder zusätzlich kann eine Hydraulik vorgesehen sein, wobei Tauchrohr und Kolben dieser für die variable Länge der Beine sorgen. Der hydraulische Druck kann maschinell, beispielsweise mittels eines Elektromotors oder von Hand mittels einer Pumpe und/oder aus einer Druckversorgungseinrichtung des Fahrzeugs bereitgestellt werden.

Dabei kann es vorteilhaft sein die Beine jeweils paarweise in der Länge zu ändern, wobei nach Anwendung bei einem vier Beine umfassenden Transportgestell das hintere und vordere Beinpaar jeweils zusammen angesteuert werden kann, indem beispielsweise eine verbindende Mechanik verwendet wird oder die Druckzuführung zu den Hydraulikeinheiten verbunden wird. In besonderen Anwendungsfällen, insbesondere bei schräger Stellung des Fahrzeugs, kann es angezeigt sein, die seitlichen Beinpaare miteinander zu betreiben oder untereinander auszugleichen. Hierzu kann es von Vorteil sein, wenn bei hydraulischen Einrichtungen über Verbindungsventile die einzelnen Hydraulikzylinder je nach Anforderung miteinander verbunden beziehungsweise voneinander getrennt werden können.

In einer besonders bedienerfreundlichen Variante kann vorgesehen sein, dass eine elektronische Steuereinheit die erforderliche Längeneinstellung der einzelnen Beine zur Anpassung an den Ladeboden des Fahrzeugs ermittelt und die Länge der Beine entsprechend anpasst. Hierzu kann die Steuereinheit mit einer Justiervorrichtung ausgestattet sein, mittels derer die Ausrichtung des Ladebodens des Kraftfahrzeugs ermittelt und das Transportgestell automatisiert angeglichen wird. Hierbei kann vorteilhafterweise eine hydraulische Einrichtung mit einer Pumpe verwendet werden. Die Energieversorgung der Pumpe kann separat am Transportgestell vorgesehen sein oder aus dem Bordnetz, beispielsweise über die Anhängersteckdose, gespeist werden. Gegebenenfalls notwendige Schnittstellen zu Sensoren für die Ermittlung der Lage des Ladebodens des Fahrzeuges können in vorzugsweiser Ausführung über Funkprotokolle wie Bluetooth oder dergleichen bereitgestellt werden, alternativ können Kabel verlegt werden. Besonders vorteilhaft kann auch die Auswertung von Signalen einer gegebenenfalls vorhandenen Niveauregulierung des Fahrzeugs sein.

Für die Ausrichtung des Transportgestells kann unabhängig von der Art der Steuerung beziehungsweise Einstellung der Länge der Beine zum erleichterten Be- oder Entladen des Transportbehälters eine Justiervorrichtung vorgesehen sein, mittels derer das Transportgestell auf den Ladeboden ausgerichtet wird. Im einfachsten Fall kann es sich um jeweils am Transportgestell und am Fahrzeug, beispielsweise an der Ladekante, angebrachte Marken handeln, die aufeinander abgestimmt werden oder über die eine zumindest grobe Abstimmung angepeilt werden kann. Komfortablere Ausgestaltungen können die Verwendung zumindest eines Lasers vorsehen, über den zumindest an einer Seite des Fahrzeugs, vorzugsweise an beiden Seiten eine Peilung vom Transportgestell ins Fahrzeuginnere oder umgekehrt eine genaue Ausrichtung von Fahrzeug und Transportgestell liefert. Besonders vorteilhaft können entsprechend angeordnete Sensoren, beispielsweise fotoselektive Sensoren sein, deren Signale von der zuvor erwähnten Steuerung erfasst werden und damit einen automatischen Abgleich erlauben.

In einer bevorzugten Ausführungsform wird das Transportgestell zum Be- oder Entladen des Transportbehälters mit dem Fahrzeug verbunden. Dadurch wird in vorteilhafter Weise verhindert, dass das Transportgestell während des Absetz- beziehungsweise Aufnahmevorgangs vom Fahrzeug abgleitet und die Gefahr besteht, dass der Transportbehälter unabgefangen aus dem Fahrzeug rutscht. Die Fixierung des Transportgestells kann über Bolzen, Rasten, Hebel- oder Hakenverschlüsse und dergleichen erfolgen. Besonders vorteilhaft können Schnappverschlüsse sein, bei denen das Transportgestell bei einem Kontakt mit den verriegelnden Teilen selbsttätig einschnappt und verriegelt wird und mittels einer von Hand oder maschinell, beispielsweise mittels eines Elektromagneten wieder entriegelt werden kann, wenn das Transportgestell vom Fahrzeug gelöst werden soll.

Um den Transportbehälter reibungsarm im Fahrzeug be- und entladen zu können, sind zumindest zwei zueinander parallel angeordnete Schienen im Fahrzeug vorgesehen, entlang denen der Transportbehälter aus dem Fahrzeug auf das Transportgestell verschoben werden kann. Entsprechend weist das Transportgestell in Verlängerung zu diesen Schienen korrespondierende Schienen auf, so dass der Transportbehälter auf annähernd gleichem Niveau aus dem Fahrzeug direkt auf das Transportgestell gerollt werden kann. Hierzu weisen die Schienenelemente des Fahrzeugs und des Transportgestell homogen ineinander laufende Enden auf, die sich zur Bildung eines Schienenstrangs teilweise überlappen und beim Ansetzen des Transportgestells an das Fahrzeug formschlüssig ineinander greifen können. In einem entsprechend ausgestalteten Ausführungsbeispiel kann ein derartiger Formschluss gleichzeitig die oben beschriebene Fixierung des Transportgestells am Fahrzeug darstellen. Die Schienen und deren Befestigung im Fahrzeug können so ausgestaltet sein, dass im Fahrzeug vorhandene Befestigungspunkte genutzt werden, so dass weitere Vorkehrungen zur Befestigung der Schienen und deren statischen Überlegungen zur Aufnahme des Transportbehälters entfallen können. Eine besonders vorteilhafte Ausgestaltung für die Schienen und deren Halterungen sieht vor, dass ein Schienensystem für mehrere Fahrzeugtypen vorgehalten werden kann, indem die entsprechenden Fixierpunkte an den verschiedenen Fahrzeugtypen in einem Schienensatz vorgesehen werden, so dass lieferantenseitig die Lagerhaltung als auch bedienerseitig ein Wechsel zu unterschiedlichen Fahrzeugtypen erleichtert wird, insbesondere wenn ein auf mehrere Fahrzeugtypen geeigneter Transportbehälter verwendet wird.

Am Transportbehälter können zur Aufnahme auf den Schienen Elemente aufgenommen sein, die eine Rollbewegung auf den Schienen erlaubt. Dies können Räder sein, die in Vertiefungen der Schienen rollen, weiterhin können andere Rolleinheiten vorgesehen sein, beispielsweise tonnenförmige oder ballige Rollkörper, die am Transportbehälter verdrehbar aufgenommen sind und auf den Schienen abrollen. Alternativ können am Fahrzeugboden Rolleinheiten, beispielsweise in Aufnahmeschienen, die wie die zuvor beschriebenen Schienen befestigt sein können, auf denen der Transportbehälter rollt, wobei dieser über entsprechende Laufbahnen wie Schienen verfügt. Die Führung in Richtung Ladeöffnung kann dabei am Transportbehälter und/oder am Fahrzeugboden vorgesehen sein. Das Transportgestell verfügt in diesem Falle über ähnliche Einrichtungen wie der Fahrzeugboden.

Zur Herstellung der Rollverbindung zwischen Transportbehälter und Schienen haben sich Rolleinheiten erwiesen, die aus Kugelrollenlager gebildet sind. Derartige Kugelrollenlager können aus einer Metall- oder Kunststoffkugel gebildet sein, die in einem entsprechenden Käfig verliersicher aufgenommen ist, wobei der Käfig mit dem Transportbehälter oder mit dem Fahrzeugboden oder einem daran befestigten Teil aufgenommen wird. Vorteilhaft kann beispielsweise zur Dämpfung von Stößen sein, wenn die Kugel gegenüber Verlagerungen im Käfig entgegen der Kraft eines Energiespeichers wie Feder oder Gummielement mit Vorspannung eingebracht ist und bei stoßartigen Kräften auf die Kugel im Käfig unter Kraftaufnahme verlagert werden kann. Es versteht sich, dass zwischen Energiespeicher und Kugel ein entsprechendes Lager zur Verminderung der Reibung vorgesehen sein kann.

Die Anzahl der über den Transportbehälter verteilten Rolleinheiten hängt unter anderem von deren Tragfähigkeit und dem Gewicht des Transportbehälters ab. Als vorteilhaft haben sich jeweils paarweise auf die beiden Schienen verteilt zumindest jeweils zwei, vorzugsweise mehrere Paare von Rolleinheiten, beispielsweise sechs erwiesen. In besonderen Ausführungsformen, beispielsweise bei regelmäßig auftretender asymmetrisch verteilter Ladung, können pro Schiene unterschiedliche Anzahlen von Rolleinheiten vorgesehen werden.

Insbesondere während der Fahrt, jedoch auch beim Absetzen oder bei einem nur teilweisen Ausziehen des Transportbehälters aus dem Fahrzeug, wenn beispielsweise der Transportbehälter - wie oben erwähnt - lediglich die nutzbare Länge des Fahrzeugs erweitern soll, kann eine Sicherung des Transportbehälters gegen ein Abheben von den Schienen vorgesehen sein. In effizienter und ökonomischer Weise können die Schienen selbst ein entsprechendes Profil aufweisen, in das der Transportbehälter längs des Verfahrweges des Transportbehälters mit einem Gegenprofil so eingreift, dass eine Verlagerung des Transportbehälters zur Seite und/oder nach oben von den Schienen weg vermieden wird. Derartige Profile können beispielsweise im Querschnitt U- oder S-förmig sein und vorteilhafterweise in die Schienen direkt oder in die Aufnahmeteile der Schienen integriert sein.

Weiterhin kann es von Vorteil sein, wenn eine Sicherungseinrichtung gegen eine Verlagerung des Transportbehälters längs der Schienen vorgesehen ist. Hierzu kann der Transportbehälter an den Schienen oder deren Aufnahmeteilen am Fahrzeugboden verrastet werden. Es hat sich als besonders vorteilhaft erwiesen, wenn beim Einbringen des Transportbehälters dieser in einer Endstellung selbständig in eine Halteeinrichtung einrastet und eine Entriegelung von einem Eingriffsbereich des Transportgestells aus desaktivierbar ist. Beispielsweise kann im Bereich der Ladeöffnung ein Seilzug vorgesehen sein, der bei Betätigung eine federbelastete Raste oder Klinke löst, die entgegen der Federkraft bei Einbringen des Transportbehälters in das Fahrzeug einrastet.

Der Transportbehälter rollt - sofern keine Gegenmaßnahmen ergriffen werden - insbesondere bei optimierter Reibung zwischen Schienen und Rolleinheiten und abschüssigem Standort des Fahrzeugs selbständig aus der Ladeöffnung auf das Transportgestell. Um die Kontrolle über den Transportbehälter - auch bei gelöster Sicherungseinrichtung - zu gewährleisten, kann es vorteilhaft sein, diesen in einer zwangsgeführten Bewegung vom Fahrzeug auf das Transportgestell zu überführen. Hierzu kann zwischen Fahrzeug und Transportbehälter ein Untersetzungsgetriebe zur Längsbewegung des Transportbehälters gegenüber dem Fahrzeug vorgesehen sein. Beispielsweise kann nach einer Festlegung und Ausrichtung des Transportgestells am Fahrzeug vor dem Entriegeln der Sicherungseinrichtung der Transportbehälter mit einer eines vorzugsweise am Transportgestells angebrachten Trapezgewindes oder einer Spindel eines Spindelgetriebes verbunden werden, das anschließend in Gang gesetzt wird, so dass der Transportbehälter sicher auf das Transportgestell überführt werden kann.

Dabei kann das Untersetzungsgetriebe von Hand mittels einer Kurbel eines Handrads oder dergleichen oder mittels eines Elektromotors angetrieben werden. Als besonders vorteilhaft hat es sich erwiesen, wenn das Untersetzungsgetriebe zusätzlich oder alternativ zum Handbetrieb eine Schnittstelle zu einem mobilen Elektromotor aufweist, beispielsweise kann ein Antriebsstift vorgesehen sein, der mit einem Akkuschrauber verbindbar ist.

Die Erfindung wird anhand der Figuren 1 bis 20 näher erläutert. Hierbei zeigen:

- Figuren 1 bis 3: vorteilhafte Ausführungsbeispiele mit einem am Transportbehälter angebrachten Transportgestell,
- Figuren 4 bis 7: vorteilhafte Ausführungsbeispiele mit einem vom Transportbehälter getrennten Transportgestell,
- Figuren 8 und 9: ein Ausführungsbeispiel eines Transportgestells,
- Figur 10: eine vorteilhafte Anordnung von Führungsschienen im Fahrzeug,
- Figur 11: ein Ausführungsbeispiel über die Anordnung von Rolleinheiten am Transportbehälter,
- Figur 12: ein Ausführungsdetail zur Ausgestaltung einer Sicherungseinrichtung,
- Figuren 13 und 14: Ausführungsbeispiele von Einbauteilen,
- Figur 15: eine vorteilhafte Ausgestaltung eines Untersetzungsgetriebes,
- Figuren 16 bis 18: Ausgestaltungsbeispiele für einen Transportbehälter,
- Figur 19: ein Ausführungsbeispiel eines Transportbehälters mit geänderter Spurweite
und
- Figur 20: ein Ausführungsbeispiel eines Transportbehälters mit Hilfsstützen.

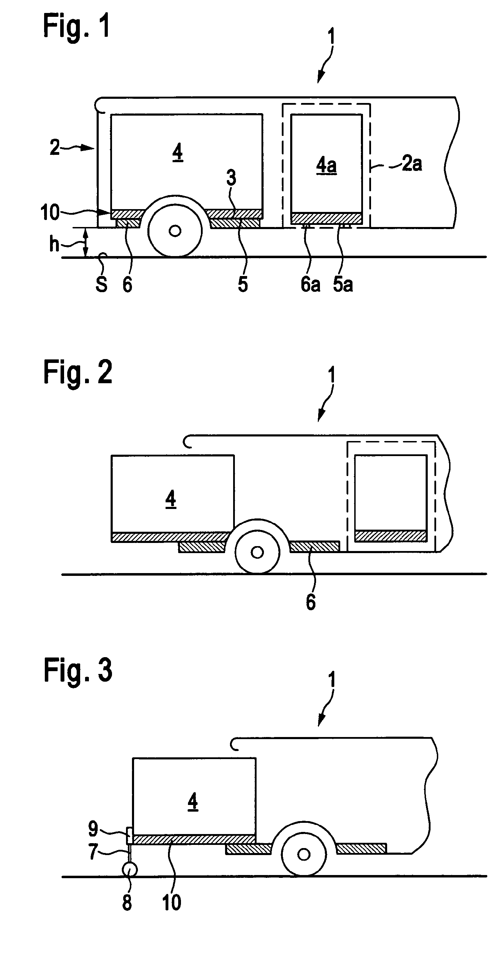

Figur 1 zeigt schematisch den hinteren Teil eines Fahrzeugs 1 mit einer Ladeöffnung 2 am Heck sowie alternativ oder zusätzlich einer Ladeöffnung 2a an der Seite, in die jeweils ein Transportbehälter 4 beziehungsweise 4a eingebracht und abgesetzt werden kann. Es versteht sich, dass das Fahrzeug 1 wahlweise lediglich mit einem Transportbehälter ausgestattet sein kann, wobei der hintere Transportbehälter 4 dann den Raum des dargestellten Transportbehälters 4a zusätzlich einnehmen kann. Die Ladeöffnungen 2, 2a können durch schwenkbare Türen oder Schiebetüren verschlossen werden. Die Transportbehälter 4, 4a werden in den Ladeboden 3 eingebracht und dort beispielsweise mittels am Behälterboden 5, 5a angebrachten Führungseinrichtungen entlang von am Ladeboden 3 angebrachten Schienen 6, 6a in Richtung Ladeöffnung verfahren. Hieraus ergibt sich eine Anordnung der Schienen 6 in Fahrtrichtung und der Schienen 6a quer zur Fahrtrichtung.

Die Transportbehälter 4, 4a werden vom Fahrzeug abgesetzt, indem sie entlang der Schienen nach außen verschoben werden und von einem Transportgestell 10 aufgenommen werden, das sich in den gezeigten Ausführungsbeispielen unterhalb des Transportbehälters 4, 4a befindet. Im einfachsten Falle werden hierzu in dem Transportgestell 10 eingelassene Stützen oder Beine, die gegebenenfalls Räder enthalten können, ausgeschwenkt oder separat vorhandene Beine können in das Transportgestell eingesteckt werden. Durch Verstellen der Länge der Beine wird das Transportgestell 10 auf die Höhe h des Ladebodens 3 gebracht. Gegenüber der Straßenoberfläche S ist dabei der Ladeboden um den Betrag h abgehoben, wobei das Fahrzeug 1 in Abhängigkeit vom Gewicht des Transportbehälter beziehungsweise der Transportbehälter 4, 4a mehr oder weniger stark eingefedert ist und bei Absetzen der Transportbehälter 4, 4a entsprechend ausfedert. Das anschließende Einbringen eines Transportbehälters 4, 4a wird daher erfindungsgemäß dadurch erleichtert, dass die Länge der Beine des Transportbehälters 4, 4a an die neue Höhe h angepasst wird, so dass eine mühevolle Angleichung über Rampen und dergleichen entfallen kann.

Figur 2 zeigt den halb ausgefahrenen Zustand des Transportbehälters 4. Damit der Transportbehälter nicht aus dem Fahrzeug 1 kippt, wenn sich der Schwerpunkt des Transportbehälters weiter nach außen verlagert, ist im Bereich der Schienen 6 eine entsprechende Sicherungseinrichtung vorhanden. Im teilweise ausgefahrenen Zustand des Transportbehälters 4 können erste, beispielsweise im Bereich der ausgefahrenen Stirnseite angeordnete Beine ausgefahren, beispielsweise ausgeschwenkt werden. Ein zweites Paar Beine kann dann ausgefahren werden, wenn der Transportbehälter noch weiter ausgefahren ist und das erste Beinpaar einen Teil der Last des Transportbehälters übernommen hat. Auf diese Weise kann das zweite Beinpaar nahe am anderen stirnseitigen Bereich aufgenommen werden.

Soll der Transportbehälter 4 - wie in Figur 3 gezeigt - nicht vollständig aus dem Fahrzeug abgesetzt werden sondern nur zur Verlängerung des nutzbaren Raums des Fahrzeugs dienen, um beispielsweise einen mobilen Verkaufsstand auszubilden, wobei Fahrzeug 1 und Transportbehälter 4 entsprechend bezüglich ihrer Außenmaße so aufeinander abgestimmt sein können, dass die Übergänge Passungen bilden, kann es vorteilhaft sein, die Sicherungseinrichtung gegen ein Verkippen des Transportbehälters 4 so stabil auszubilden, dass eine Hilfsstütze 7 ausreichend sein kann um die noch verbleibende Last abzufangen. Vorteilhaft kann zusätzlich ein an die Hilfsstütze 7 angebrachtes Rad 8 sein, so dass der Transportbehälter 4 mit Unterstützung der Hilfsstütze 7 aus dem Fahrzeug 1 heraus gerollt werden kann. Die Hilfsstütze kann mittels einer Befestigung 9, die schwenkbar die Hilfsstütze 7 in das Transportgestell 10 versenken kann, am Transportbehälter 4 befestigt sein. Derartige Transportbehälter 4 können mittels eines Antriebs, beispielsweise einer mittels eines Elektromotors angetriebenen Getriebes aus der Ladeöffnung heraus und wieder hineingefahren werden, wobei das Getriebe zwischen Fahrzeug und Transportbehälter wirksam ist und der Antrieb autark im Transportbehälter angeordnet sein kann.

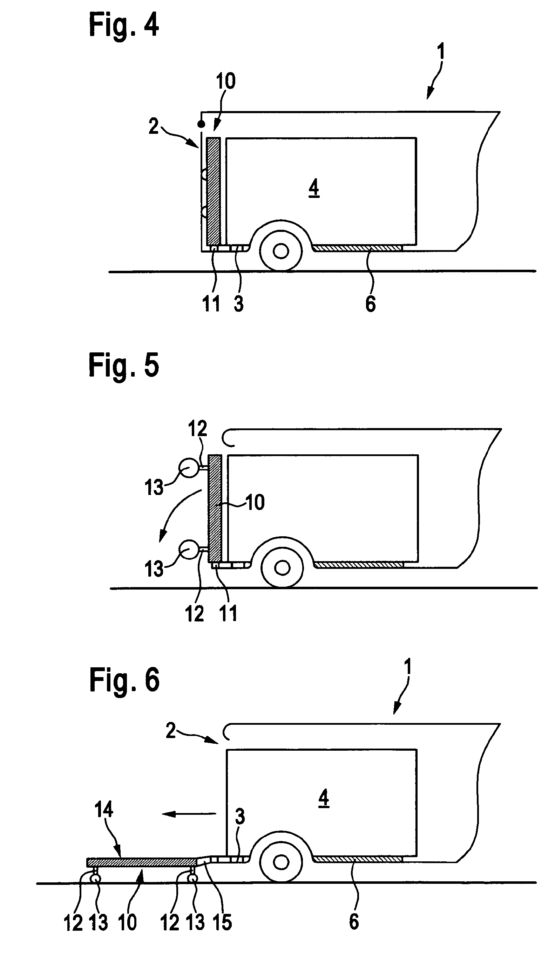

Figur 4 zeigt ein vorteilhaftes Ausgestaltungsbeispiel eines Fahrzeugs 1 mit einer Transportvorrichtung bestehend aus einem Transportbehälter 4, bei dem beispielsweise aus Gründen eines tiefer liegenden Schwerpunktes das Transportgestell 10 separat ausgebildet ist. Der Transportbehälter 4 ist direkt auf den Schienen 6 untergebracht und das Transportgestell 10 ist platzsparend im gezeigten Beispiel hochkant zwischen Ladeöffnung 2 und Transportbehälter 4 untergebracht. Es versteht sich, dass insbesondere aus Platzgründen, beispielsweise bezüglich der Ausdehnung in der Länge, das Transportgestell 10 gefaltet oder ineinander geschoben sein kann. Bei Vorhandensein einer Seitentür kann das Transportgestell 10 auch zwischen Fahrer und Transportbehälter angeordnet sein, wobei es durch die Seitentür abgesetzt wird, oder es kann unter dem Ladeboden 3 herausziehbar angeordnet sein.

Zur besseren Handhabbarkeit kann das Transportgestell mittels einer vorzugsweise lösbaren und verschwenkbaren Aufnahme 11 mit dem Fahrzeug verbunden sein. Entsprechende hydraulische oder mittels Seilzügen betätigbare Hilfsmittel oder dergleichen zum einfachen Verschwenken oder Ausbringen des Transportgestells 10 können vorgesehen sein. Gemäß Figur 5 werden in einer vorteilhaften Abfolge zuerst die mit Rädern 13 ausgestatteten Beine 12 ausgefahren, danach wird das Transportgestell 10 um die Aufnahme 11 in Pfeilrichtung auf den Untergrund, beispielsweise eine Straßenoberfläche verschwenkt. In besonders ausgestalteten Ausführungsbeispielen von Fahrzeugen kann das Transportgestell 10 direkt den Abschluss der Ladeöffnung 2 bilden, während in Ausgestaltungen zum Einbau in multifunktionalen Lieferwagen, Kombis, Vans oder dergleichen das Transportgestell 10 so eingefahren werden kann, dass es ohne Änderungen des Fahrzeugs reversibel einbau- und entnehmbar ist.

Im weiteren Verlauf der Absetzung eines Transportbehälters 4 wird - wie in Figur 6 dargestellt - das Transportgestell 10 auf die Beine 12 mit den Rädern 13 abgesenkt und abgestellt. Mittels einer Befestigung 15, die mit der Aufnahme 11 identisch sein kann, wird das Transportgestell 10 am Fahrzeug 1 fixiert. Weitere Arten der Befestigung des Transportgestells 10 am Fahrzeug 1 können über separate, am Fahrzeug vorzugsweise über bereits vorhandene Befestigungspunkte aufgenommene Halteeinrichtungen sein. Beispielsweise kann der Transportbehälter 4 an einer vorhandenen Anhängerkupplung fixiert werden. Nach dem Absetzen auf den Boden wird das Transportgestell an die Höhe des Ladebodens 3 angepasst, indem die Beine 12 entsprechend hydraulisch, mittels eines Spindeltriebs mechanisch oder in ähnlicher Weise in ihrer Länge eingestellt werden. Hierbei werden insbesondere die im Fahrzeug 1 angebrachten Schienen 6 mit auf dem Transportgestell 10 angebrachten Schienen 14 zur Deckung gebracht. Hierzu kann mittels einer Justiereinrichtung gearbeitet werden, beispielsweise kann mittels eines Lasers die Übereinstimmung der Schienen 6, 14 angepeilt werden. In Verbindung mit optischen Sensoren kann bei einer automatisierten Längenverstellung der Beine die Übereinstimmung eingeregelt werden.

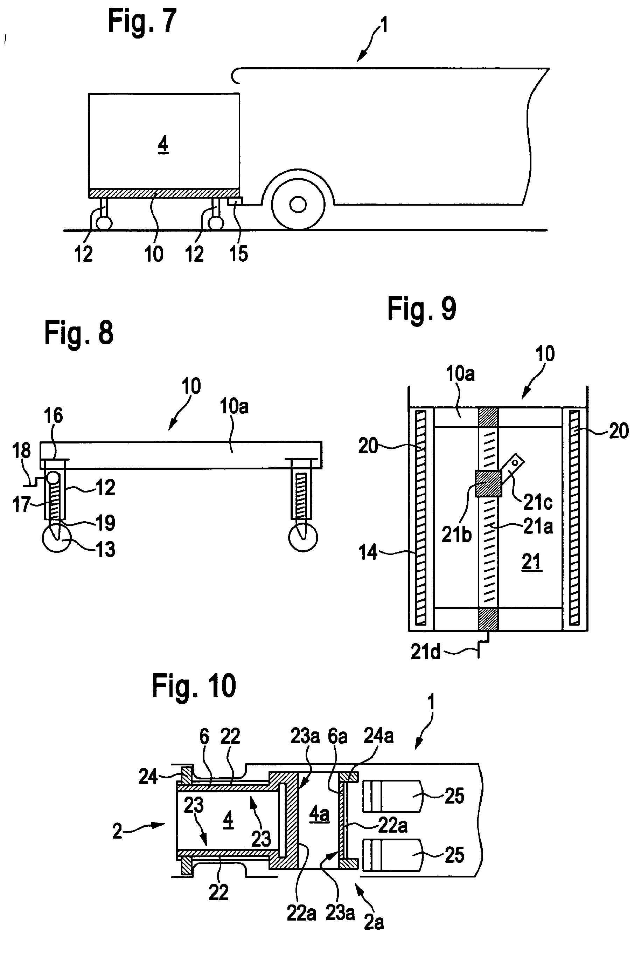

Gemäß Figur 7 ist kann es vorteilhaft sein, die Befestigung des Transportgestells 10 so auszugestalten, dass sie nach dem Absetzen des Transportbehälters 4 leicht von Fahrzeug 1 zu trennen ist. Infolge eines Ausfederns des Fahrzeugs nach dem Übergang des Transportbehälters 4 auf das Transportgestell 10 wird dieses vom Fahrzeug 1 mit einer von unten gerichteten Kraft beaufschlagt. Eine Befestigung 15 kann daher in vorteilhafter Weise so ausgerichtet sein, dass von oben nach unten in das Transportgestell 10 eingreifende Haltemittel am Fahrzeug angebracht werden, die bei einer Entlastung des Fahrzeugs selbständig das Transportgestell freigeben. Alternativ oder zusätzlich kann zur Unterstützung der Trennung von Fahrzeug und Transportgestell dieses manuell oder automatisch bei Belastungswechsel angehoben werden, beispielsweise durch eine Änderung der Länge der Beine. Beim Beladen kann eine derartige Anpassung in umgekehrter Reihenfolge ablaufen. Insbesondere kann von Vorteil sein, in diesem Zusammenhang und vorzugsweise zu diesem Zweck eine Federung der Beine 12 vorzusehen, die an die Federrate des Fahrzeugs 1 angepasst oder dieser zumindest angenähert ist.

Figur 8 zeigt ein vorteilhaftes Ausgestaltungsbeispiel eines Transportgestells 10 in Seitenansicht. An einem Rahmen 10a, der aus Blech-, Stanz-, und/oder Formziehteilen gefügt wie geschweißt, geschraubt und/oder gesteckt sein kann, sind über Verschwenkeinrichtungen 16 mehrere, vorzugsweise drei oder vier Beine 12 aufgenommen, an denen vorzugsweise über ein Drehlager 19 Räder 13 angeordnet sind. In vorteilhafter Weise können die Beine 12 in den Rahmen 10a so eingeschwenkt werden, dass diese bei Verdrehung der Räder in die Ebene des Rahmens 10a ohne zusätzlichen Raumbedarf in diesem untergebracht werden können.

Durch Mittel zur Höhenverstellung - im gezeigten Ausführungsbeispiel ein Spindelgetriebe 17 - sind die Beine 12 in der Höhe an die gewünschte Höhe anpassbar. Vorzugsweise können jeweils zwei Beine einer Seite, beispielsweise die einander an einer Stirnseite des Transportbehälters 4 angeordneten Beine 12 gleichzeitig in der Höhe verstellt werden, genauso wie es von Vorteil sein kann, wenn diese Beine gleichzeitig und in einem Arbeitsgang aus dem Rahmen 10a ausgeschwenkt werden. Das Spindelgetriebe 17 wird im gezeigten Ausführungsbeispiel mit einer Handkurbel 18 verstellt. Weitere Ausführungsbeispiele können eine elektrische Verstellung vorsehen. Hydraulikzylinder können die Funktion der Spindelgetriebe ersetzen oder ergänzen, wobei der hydraulische Druck mittels einer Druckversorgungspumpe oder manuell aufgebracht werden kann.

In Figur 9 ist ein Ausführungsbeispiel eines Transportgestells 10 schematisch in Draufsicht dargestellt. Zusätzlich zu den in Figur 8 gezeigten Bauteilen sind die Schienen 14 mit Laufflächen 20 zu entnehmen, die integral im Rahmen 10a eingearbeitet oder als separate Teile aufgebracht sind. Weiterhin ist ein Untersetzungsgetriebe - hier als Spindelgetriebe 21 - dargestellt, das bei einer Verbindung des Transportgestells 10 mit dem Fahrzeug eine zwangsgeführte Überführung des Transportbehälters auf das Transportgestell 10 erlaubt, so dass insbesondere an Gefällstrecken keine unkontrollierten Bewegungen ausführen kann. Hierzu weist das Spindelgetriebe 21 ein Spindelgewinde 21 a beziehungsweise eine Gewindespindel auf, auf der eine Spindelmutter 21 b aufgebracht ist, die bei Verdrehung des Spindelgewindes 21 a entlang dessen Rotationsachse axial verlagert wird. Mittels der Behälterlasche 21c, die beweglich, das heißt verdrehbar und/oder verschwenkbar an der Spindelmutter 21 b aufgenommen sein kann, wird der Transportbehälter an der Spindelmutter aufgenommen und durch Verdrehen der Spindel mittels der Kurbel 21 d aus dem Fahrzeug gezogen beziehungsweise an einem Gefälle gegen die Hangabtriebskraft gebremst heraus bewegt. Es versteht sich, dass die Kurbel 21 d durch einen Hilfsantrieb, beispielsweise einen Elektromotor, ersetzt werden kann. Es hat sich als besonders vorteilhaft erwiesen, statt oder an der Kurbel 21 d einen Antrieb für einen Akkuschrauber vorzusehen, so dass insbesondere in Handwerkerkreisen eine besonders einfache Art des Antriebs des Spindelgetriebes erzielen lässt.

Bei der Nutzung von Fahrzeugen für unterschiedliche Zwecke hat es sich als vorteilhaft erwiesen, wenn der Transportbehälter samt seinen Führungsbauteilen aus dem Fahrzeug entfernbar ist beziehungsweise unterschiedliche Transportbehälter mit unterschiedlichen Funktionen und gegebenenfalls unterschiedlichen Führungsbauteilen einsetzbar sind. Besonders vorteilhaft ist dabei, wenn die Führungsbauteile an im Fahrzeug serienmäßig vorhandenen Befestigungspunkten befestigt werden. Figur 10 zeigt hierzu zwei alternativ oder gemeinsam einsetzbare Einbauteile 23, 23a zum Absetzen aus einer Hecktür oder Heckklappe über eine Ladeöffnung 2 oder aus einer Seitentür oder Schiebetür über eine Ladeöffnung 2a. Im Falle der Verwendung beider Einbauteile23, 23a können zwei Transportbehälter 4, 4a verwendet werden, die den gesamten Laderaum ab den Fahrzeugsitzen 25 ausnutzen, wobei ein Transportbehälter auf Schienen 6 längs zur Fahrtrichtung und ein Transportbehälter 4a auf Schienen 6a quer zur Fahrtrichtung angeordnet ist. Im Wesentlichen bestehen die Einbauteile aus Längsträgern 22, 22a, die die Schienen 6, 6a tragen oder in die die Schienen eingebracht sind, und aus Befestigungslaschen 24, 24a, die den Raum zu den im Fahrzeug vorhandenen oder eingebrachten Befestigungspunkten überbrücken und an den die Verbindung zum Fahrzeug 1 erfolgt. In bevorzugter Ausführung können zwei Einbauteile 23 beziehungsweise 23a dieselbe Form aufweisen und zueinander spiegelbildlich zur Bildung eines Paars von Einbauteilen 23 beziehungsweise 23a zur Aufnahme eines Transportbehälters 4 beziehungsweise 4a angeordnet werden. Besonders bevorzugt werden gleiche Einbauteile für mehrere ähnliche Fahrzeugtypen konzipiert, indem mehrere, auf die einzelnen Fahrzeugtypen angepasste Befestigungspunkte in einem Einbauteil vorgesehen werden. Auf diese Weise kann die Teilevielzahl eingeschränkt werden.

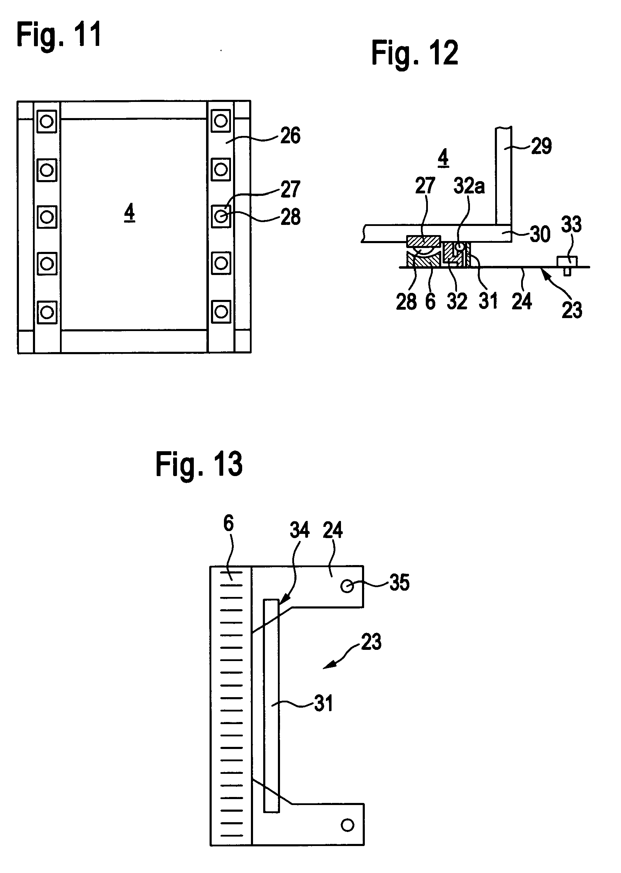

Korrespondierend zu den im Fahrzeug vorhandenen Schienen sind am Transportbehälter entsprechende Rolleinheiten vorgesehen. Figur 11 zeigt einen Transportbehälter 4 in Untersicht mit mehreren - hier 10 - Rolleinheiten 27, die an einem Behälterrahmen 26 aufgenommen sind. Anzahl und Verteilung der Rolleinheiten 27 richten sich nach dem Gewicht und der Ladungsverteilung des Transportbehälters 4. Aus diesen Gesichtspunkten ergibt sich auch die Ausgestaltung des Behälterrahmens 26, der vorteilhafterweise auch in die Gesamtgestaltung des Transportbehälters in Form eines selbsttragenden Gehäuses integriert sein kann. Die Rolleinheiten 27 bestehen im gezeigten Ausgestaltungsbeispiel aus Kugelrollen 28, die in einem Gehäuse verliersicher untergebracht sind. Entsprechend ist die Kontur der Schienen 6, 14 (siehe Figur12) angepasst.

Figur 12 zeigt ein Detail aus dem Bereich der Aufnahme des Transportbehälters 4 mit einer teilweisen Darstellung des Seitenaufbaus 29 in Form einer Behälterwand und der Bodenplatte 30 auf den Schienen 6. Seitenaufbau 29 und Bodenplatte 30 können modulartig oder einstückig ausgestaltet sein. Die Bodenplatte nimmt im gezeigten Ausführungsbeispiel die Rolleinheiten 27 mit den Kugelrollen 28 direkt auf. Zur Sicherung des Transportbehälters vor Verkippen sind ineinander greifende Mittel vorgesehen, die am Transportbehälter 4 und an den beiden Einbauteilen 23 vorzugsweise in der Nähe der Schienen 6 vorgesehen sind. Es versteht sich, dass ähnliche Mittel auch am Transportgestell vorgesehen sein können. Im gezeigten Ausführungsbeispiel sind am Transportbehälter 4 und am Einbauteil 23 in unmittelbarer Nachbarschaft zu den Schienen 6 Führungsschienen 31, 32 vorgesehen, die im Querschnitt winkelig sein können und einander parallel zur Bodenplatte 30 übergreifen. Zur Minimierung der Reibung können an zumindest einer Führungsschiene - hier an der am Transportbehälter 4 angebrachten Führungsschiene 32 - zumindest eine, vorzugsweise über die Länge der Führungsschiene verteilt mehrere Laufrollen 32a vorgesehen sein, die sich an der anderen Führungsschiene abstützen oder auf dieser abrollen. Es versteht sich, dass ähnliche Mittel auch an der anderen Seite des Transportbehälters angebracht sein können. In vorteilhafter Weise ist die Führungsschiene 31 auf dem Einbauteil angebracht oder mit diesem integral verbunden. Bei Blechkonstruktionen kann die Führungsschiene aus dem Längsträger 22 (siehe Figur 10) ausgestellt sein. Wahlweise kann der Längsträger 22 auch entsprechend vorgebogen sein. Das Einbauteil ist mittels der Befestigungslasche 24 und dem Befestigungsmittel 33 mit dem Fahrzeug verbunden, beispielsweise verschraubt.

Figur 13 zeigt ein Einbauteil 23 in Draufsicht. Benachbart zur Schiene 6 ist die Führungsschiene 31 zur Sicherung des Transportbehälters in Zusammenwirkung mit der am Transportbehälter angebrachten Führungsschiene mittels der Befestigungsmittel 34 angeordnet. Die Befestigungsmittel 34 können Schrauben, Nieten oder Schweißstellen sein. In einem weiteren vorteilhaften Ausgestaltungsbeispiel kann die Führungsschiene direkt aus dem Einbauteil 23 gebildet wie geformt oder ausgestellt sein. Das Einbauteil 23 weist zur Befestigung am Fahrzeug entsprechende Öffnungen 35 auf, wobei eine Vielzahl von Öffnungen entsprechend der korrespondierenden Befestigungspunkte für mehrere Fahrzeugtypen vorgesehen sein kann.

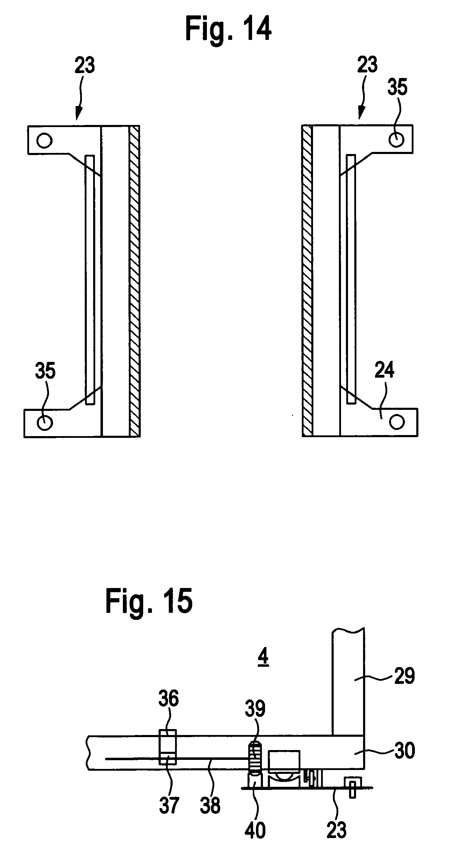

Gemäß einer besonders bevorzugten Ausführungsform der Figur 14 können zwei identische Einbauteile 23 bezüglich ihrer Form und der Wahl und Anzahl der Öffnungen 35 so ausgestaltet werden, dass sie spiegelbildlich zueinander für beide Seiten eines Fahrzeugs und/oder mehrere Fahrzeugtypen verwendet werden können. Demgemäß werden zumindest die Art und räumlichen Ausdehnungen der Befestigungslaschen 24 und Lage und Größe der Öffnungen 35 auf mehrere Fahrzeugtypen und/oder eine spiegelbildliche Anordnung abgestimmt.

Figur 15 zeigt schematisch ein Detail einer Alternative zur Verlagerung des Transportbehälters 4 mit einer Seitenwand 29 und einer Bodenplatte 30. Hierzu ist am Ladeboden oder bevorzugt am Einbauteil 23 ein Profil wie eine Zahnstange 40 vorgesehen, die in Formschluss zu einem Gegenprofil wie Zahnrad 39 steht. Das Gegenprofil ist drehfest mit einer Welle 38 verbunden, die mittels eines Antriebsmittels 37 wie Kette, Riemen oder Getriebe von einem Antrieb 36 wie Elektromotor, Handkurbel und dergleichen angetrieben wird. Auf diese Weise kann der Transportbehälter 4 unabhängig vom Transportgestell bewegt werden. Dies kann insbesondere von Vorteil sein, wenn das Transportgestell im Transportbehälter integriert ist und/oder der Transportbehälter nicht komplett abgesetzt werden soll sondern nur teilweise aus dem Fahrzeug geschoben werden soll. Dabei kann der Antrieb 36 selbsthemmend ausgebildet oder gebremst sein, so dass er gleichzeitig als Ausfahrbegrenzung dienen kann.

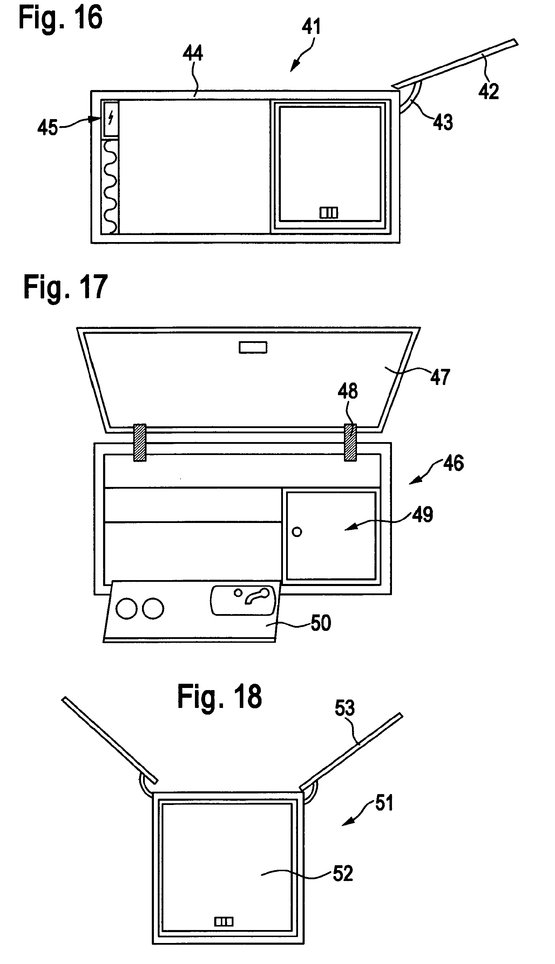

Die Art und Verwendung des oder der im Fahrzeug transportierten Transportbehälter ist unabhängig von der erfinderischen Ausgestaltung der Absetzung und Aufnahme oder der nur teilweisen Verlagerung. Die Figuren 16 bis 18 zeigen daher nur eine kleine Auswahl von vorteilhaften Transportbehältern ohne Einschränkung der Verwendungsmöglichkeiten.

Figur 16 zeigt eine vorteilhafte Ausgestaltungsmöglichkeit eines Transportbehälters als Kühlbehälter 41 mit einer eigenen Versorgungseinrichtung 45, die gleichzeitig eine Stromversorgung für die Verlagerung des Kühlbehälters 41 im Fahrzeug und ein Kühlaggregat sein kann. Mehrere Türen zur Beladung mit Kühlgut durch eine Seitentür und/oder durch eine Klappe 42, die mittels eines vorzugsweise selbsthaltenden Schwenkscharniers 43 geöffnet werden kann, können vorgesehen sein. Die Behälterwände 44 können im Sinne einer optimierten thermischen Isolierung ausgestaltet sein. Der Kühlbehälter 41 eignet sich insbesondere für Metzgereien, Partyservices und dergleichen.

Figur 17 zeigt ein Ausgestaltungsbeispiel eines Freizeitbehälters 46, der sich insbesondere für Camper, mobile Gastronomieunternehmungen und dergleichen eignet. Wird der Freizeitbehälter nicht vollständig abgesetzt, steht bei teilweisem Auszug der verbleibende Raum als Unterkunft oder Stauraum zur Verfügung. Das klappbare Dach 47 kann ausgestellt werden und als Wetterschutz dienen. Entsprechend können die Scharniere gerastet und/oder automatisch betätigt werden. Der Freizeitbehälter 46 kann über Einrichtungen 49 zum Bevorraten von Proviant oder als Stauraum sowie über Sanitäreinrichtungen 50 verfügen.

Figur 18 zeigt einen Vielzweckbehälter 51, beispielsweise für Handwerker, Marktbeschicker und dergleichen, der mit frei konfigurierbaren Klappen 53 und Türen 52 versehen werden kann, die entsprechend an die zu verwendenden Fahrzeuge und Anforderungen der Verwender anpassbar ist. Derartige Vielzweckbehälter können auch als Standardware für mehrere Fahrzeugtypen passend vorgesehen sein.

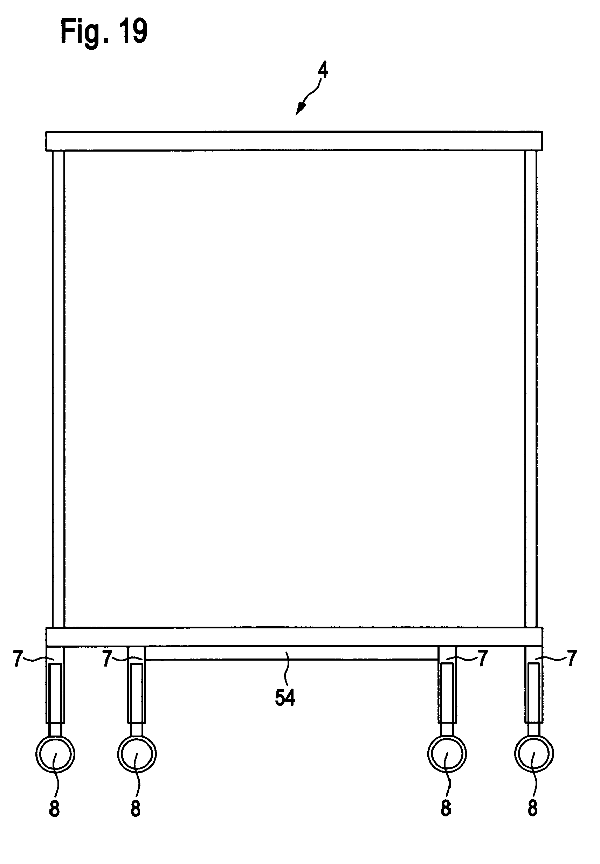

Figur 19 zeigt einen Transportbehälter 4 mit zwei einzelnen, an der hinteren Behälterseite, die zuletzt aus dem Fahrzeug ausgefahren wird, angebrachten verschwenkbaren Räder 8 enthaltende Hilfsstützen 7 und einer Achse 54, an der zwei Hilfsstützen 7 fest angeordnet sind. Die Hilfsstützen können in bereits beschriebener Weise stufenlos mittels eines Handbetriebs, hilfskraftunterstützt und fremdkraftbetätigt in ihrer Höhe verstellt werden. Die Achse 54 ist im Ganzen aus dem Transportbehälter 4 ausschwenkbar. Die Spurweite der beiden an der Achse 54 befestigten Hilfsstützen 7 ist so bemessen, dass sie an einen durch die Hecköffnung zu beladenden Transportbehälter 4 (wie gezeigt) und an einen schmaleren Transportbehälter 4a (siehe Figur 1) angebracht werden kann.

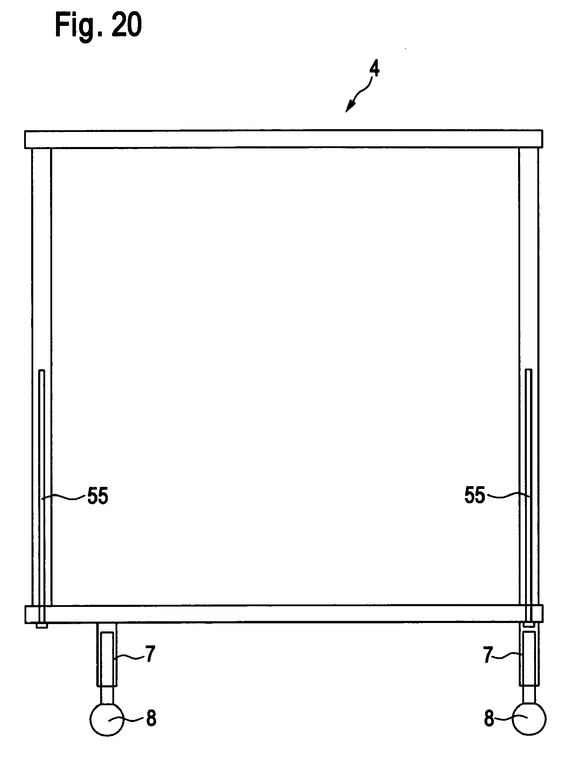

Figur 20 zeigt einen Transportbehälter 4 mit zusätzlichen Parkstützen 55, die außen am Behälter in entsprechenden Ösen oder innerhalb eines Pfostens des Rahmens für den Aufbau des Transportbehälters 4 geführt sein können. Die Parkstützen dienen zur Entlastung der Hilfsstützen 7 und der Räder 8 bei teilweise oder komplett abgesetztem Transportbehälter. Sie sind entsprechend den Hilfsstützen 7 stufenlos in ihrer Höhe einstellbar. Hierzu wird der Transportbehälter 4 teilweise oder komplett aus dem Fahrzeug ausgefahren. Danach werden die Parkstützen 55 ausgefahren und befestigt. Danach können die Hilfsstützen 7 - falls gewünscht - eingefahren und eingeschwenkt werden. Im Falle eines abnehmbaren Transportgestells kann dieses vom Transportbehälter 4 getrennt und anderweitig verwendet werden. Soll der Behälter wieder in das Fahrzeug eingefahren werden, werden die gegebenenfalls eingeschwenkten Hilfsstützen 7 ausgeschwenkt, an das Niveau der Straßenoberfläche angepasst und die Parkstützen 55 wieder eingezogen. Das Einbringen des Transportbehälters 4 erfolgt nach der oben beschriebenen Prozedur.

### Bezugszeichenliste

- 1: Fahrzeug
- 2: Ladeöffnung
- 2a: Ladeöffnung
- 3: Ladeboden
- 4: Transportbehälter
- 4a: Transportbehälter
- 5: Behälterboden
- 5a: Behälterboden
- 6: Schiene
- 6a: Schiene
- 7: Hilfsstütze
- 8: Rad
- 9: Befestigung
- 10: Transportgestell
- 10a: Rahmen
- 11: Aufnahme
- 12: Schwenkbares Bein
- 13: Rad
- 14: Schiene
- 15: Befestigung
- 16: Verschwenkeinrichtung
- 17: Spindelgetriebe
- 18: Kurbel
- 19: Drehlager
- 20: Laufflächen
- 21: Spindelgetriebe
- 21 a: Spindelgewinde
- 21b: Spindelmutter
- 21 c: Behälterlasche
- 21 d: Kurbel
- 22: Längsträger
- 22a: Längsträger
- 23: Einbauteil
- 23a: Einbauteil
- 24: Befestigungslasche
- 24a: Befestigungslasche
- 25: Fahrzeugsitz
- 26: Behälterrahmen
- 27: Rolleinheit
- 28: Kugelrolle
- 29: Seitenaufbau
- 30: Bodenplatte
- 31: Führungsschiene
- 32: Führungsschiene
- 32a: Laufrolle
- 33: Befestigungsmittel
- 34: Befestigungsmittel
- 35: Öffnung
- 36: Antrieb
- 37: Antriebsmittel
- 38: Welle
- 39: Zahnrad
- 40: Zahnstange
- 41: Kühlbehälter
- 42: Klappe
- 43: Schwenkscharnier
- 44: Behälterwand
- 45: Versorgungseinrichtung
- 46: Freizeitbehälter
- 47: Klappbares Dach
- 48: Scharnier
- 49: Einrichtung
- 50: Sanitäreinrichtung
- 51: Vielzweckbehälter
- 52: Tür
- 53: Klappe
- 54: Achse
- 55: Parkstütze
- h: Höhe Ladeboden
- S: Straßenoberfläche

## Patentansprüche

1. Transportvorrichtung zur Aufnahme in einem Fahrzeug (1) bestehend aus einem Transportbehälter (4, 4a, 41, 46, 51) und einem Transportgestell (10), auf welchem der Transportbehälter (4, 4a, 41, 46, 51) nach einem Absetzen von einem Ladeboden (3) des Fahrzeugs (1) transportierbar ist und von welchem der Transportbehälter (4, 4a, 41, 46, 51) auf den Ladeboden (3) des Fahrzeugs (1) aufnehmbar ist, **dadurch gekennzeichnet, dass** die Höhe des Transportgestells (10) bei abgesetztem Transportbehälter (4, 4a, 41, 46, 51) an die Höhe (h) des Ladebodens (3) anpassbar ist.

2. Transportvorrichtung nach Anspruch 1, **dadurch gekennzeichnet, dass** Transportbehälter (4, 4a, 41, 46, 51) und Transportgestell (10) voneinander getrennt ausgestaltet sind.

3. Transportvorrichtung nach Anspruch 2, **dadurch gekennzeichnet, dass** das Transportgestell (10) einen Rahmen (10a) aufweist, aus dem zumindest vier bezüglich ihrer Länge verstellbare, aus der Ebene des Rahmens (10a) in eine hierzu senkrechte Position schwenkbare Beine (12) mit Rädern (13) aufweist.

4. Transportvorrichtung nach Anspruch 3, **dadurch gekennzeichnet, dass** die Länge der Beine mittels eines Spindelgetriebes (17) einstellbar ist.

5. Transportvorrichtung nach Anspruch 3, **dadurch gekennzeichnet, dass** die Länge der Beine hydraulisch einstellbar ist.

6. Transportvorrichtung nach einem der Ansprüche 3 bis 5, **dadurch gekennzeichnet, dass** die Länge zweier Beine jeweils paarweise einstellbar ist.

7. Transportvorrichtung nach einem der Ansprüche 3 bis 6, **dadurch gekennzeichnet, dass** eine elektronische Steuereinheit zumindest eine erforderliche Längeneinstellung der einzelnen Beine zur Anpassung an den Ladeboden des Fahrzeugs ermittelt und die Länge der Beine entsprechend anpasst.

8. Transportvorrichtung nach einem der Ansprüche 1 bis 3, **dadurch gekennzeichnet, dass** das Transportgestell (10) zum Be- oder Entladen mit dem Fahrzeug (1) verbunden wird.

9. Transportvorrichtung nach einem der Ansprüche 1 bis 8, **dadurch gekennzeichnet, dass** das Transportgestell (10) zum Be- oder Entladen des Transportbehälters (4, 4a, 41, 46, 51) mittels einer Justiervorrichtung auf den Ladeboden (3) ausgerichtet wird.

10. Transportvorrichtung nach Anspruch 9, **dadurch gekennzeichnet, dass** die Justiervorrichtung ein Laser ist.

11. Transportvorrichtung nach einem der Ansprüche 1 bis 10, **dadurch gekennzeichnet, dass** im Fahrzeug (1) zumindest zwei zueinander parallel angeordnete Schienen (6, 6a) aufweist, entlang denen der Transportbehälter (4, 4a, 41, 46, 51) aus dem Fahrzeug auf das Transportgestell verschoben wird.

12. Transportvorrichtung nach Anspruch 11, **dadurch gekennzeichnet, dass** das Transportgestell (10) in Verlängerung zu den Schienen (6, 6a) im Fahrzeug (1) korrespondierende Schienen (14) aufweist.

13. Transportvorrichtung nach Anspruch 11 oder 12, **dadurch gekennzeichnet, dass** am Transportbehälter (4, 4a, 41, 46, 51) jeweils zumindest zwei Rolleinheiten (27) vorgesehen sind, mittels denen der Transportbehälter (4, 4a, 41, 46, 51) auf den zumindest zwei Schienen (6, 6a) verschiebbar aufgenommen ist.

14. Transportvorrichtung nach Anspruch 13, **dadurch gekennzeichnet, dass** die Rolleinheiten (27) Kugelrollenlager sind.

15. Transportvorrichtung nach einem der Ansprüche 11 bis 14, **dadurch gekennzeichnet, dass** der Transportbehälter (4, 4a, 41, 46, 51) gegen ein Abheben von den Schienen (6, 6a) gesichert ist.

16. Transportvorrichtung nach einem der Ansprüche 11 bis 15, **dadurch gekennzeichnet, dass** eine Sicherungseinrichtung gegen eine Verlagerung des Transportbehälters (4, 4a, 41, 46, 51) längs der Schienen (6, 6a) vorgesehen ist.

17. Transportvorrichtung nach Anspruch 16, **dadurch gekennzeichnet, dass** die Sicherungseinrichtung aus einem Eingriffsbereich des Transportgestells (10) aus desaktivierbar ist.

18. Transportvorrichtung nach einem der Ansprüche 1 bis 17, **dadurch gekennzeichnet, dass** der Transportbehälter (4, 4a, 41, 46, 51) mittels einer zwangsgeführten Bewegung vom Fahrzeug auf das Transportgestell (10) überführt werden kann.

19. Transportvorrichtung nach Anspruch 18, **dadurch gekennzeichnet, dass** zwischen Transportgestell (10) und Transportbehälter (4, 4a, 41, 46, 51) ein Untersetzungsgetriebe zur Längsbewegung des Transportbehälters (4, 4a, 41, 46, 51) gegenüber dem Fahrzeug (1) vorgesehen ist.

20. Transportvorrichtung nach Anspruch 19, **dadurch gekennzeichnet, dass** das Untersetzungsgetriebe mittels eines Elektromotors angetrieben wird.

21. Transportvorrichtung nach einem der Ansprüche 19 oder 20, **dadurch gekennzeichnet, dass** das Untersetzungsgetriebe ein Trapezgewinde ist.

22. Transportvorrichtung nach einem der Ansprüche 19 bis 21, **dadurch gekennzeichnet, dass** das Untersetzungsgetriebe an dem Transportgestell (10) angebracht ist und ein Teil des Untersetzungsgetriebes mit dem Transportbehälter (4, 4a, 41, 46, 51) verbunden wird.
